# FASCICULE DE BREVET EUROPEEN

(11) **EP 2 020 184 B1**
(45) Date de publication et mention de la délivrance du brevet: **06.01.2010**
(21) Numéro de dépôt: 08305419.7
(22) Date de dépôt: 24.07.2008
(51) Int. Cl.: A21C 9/00

(54) **Trémie à paroi recouverte d'un film lubrificateur**
Trichter mit schmierfilmbedeckter Wand
Hopper having its wall covered by a lubricating film

(30) Priorité: 30.07.2007 FR 0756813
(43) Date de publication de la demande: 04.02.2009
(73) Titulaire: MECATHERM, Société Anonyme, 67130 Barembach (FR)
(72) Inventeur: Zorn, Bernard, 67700, SAVERNE (FR)
(74) Mandataire: Rhein, Alain

(56) Documents cités:
- EP-A- 0 695 505
- WO-A-2007/083070
- DE-U1-202004 019 688
- FR-A- 2 479 661
- FR-A- 2 836 785
- FR-A- 2 871 355
- US-A- 2 054 937
- US-A- 2 612 850
- US-A- 3 490 391

## Description

La présente invention entre dans le domaine de la préparation et de la manutention de pâte de boulangerie, viennoiserie, pâtisserie ou analogue.

L'invention concerne plus particulièrement l'écoulement d'une telle pâte le long d'une surface, en particulier au sein d'un contenant, tel une trémie.

Dans l'industrie boulangère, les dispositifs destinés au transport, au stockage et au traitement de la pâte, par exemple une diviseuse, sont alimentés au travers d'une trémie. Cette dernière sert de contenant rechargé régulièrement en pâte et à l'intérieur duquel cette dernière s'écoule.

L'inconvénient majeur de l'alimentation en pâte est précisément son écoulement le long des parois du contenant d'approvisionnement. En effet, il est nécessaire de lubrifier régulièrement les parois dudit contenant afin d'assurer un bon écoulement de la pâte vers les dispositifs de traitement en aval, par exemple une diviseuse-peseuse.

De manière connue, le pouvoir adhérent de la pâte de boulangerie est tel qu'il nécessite l'utilisation d'un lubrifiant pulvérisé ou appliqué sur les parois du contenant. En complément, ces dernières sont généralement revêtues d'un matériau diminuant l'adhérence et, par conséquent, favorisant l'écoulement de la pâte, comme un revêtement composé d'une couche de résine fluorocarbonée tel le téflon®.

Un premier problème réside dans le fait que l'écoulement de la pâte absorbe le lubrifiant déposé sur lesdites parois de sorte qu'il est nécessaire d'en rajouter au fur et à mesure. Toutefois les dispositifs industriels fonctionnant préférentiellement en continu, une fois chargées en pâte, les parois intérieures situées sous le niveau de pâte, ne peuvent plus être lubrifiées sans arrêter la chaîne de production, entraînant une perte de temps et un surcoût non négligeable.

A ce propos, le lubrifiant utilisé de manière répandue est l'huile alimentaire. La qualité de glissement que cette huile procure est très appréciée. Cependant, dans la mesure ou la lubrification doit se faire de manière constante, il en résulte une consommation d'huile importante, générant un surcoût de production. Bien évidemment, cette huile de lubrification est entre temps absorbée par la pâte, effet, évidemment dommageable lorsque l'on tente de faire des produits sans addition de matière grasse. En somme, cette huile de lubrification peut polluer et dégrader la qualité du produit obtenu.

L'eau aussi a été occasionnellement utilisée afin de lubrifier une paroi en contact avec de la pâte de boulangerie. Si l'eau à l'avantage d'être peu chère et non polluante pour ladite pâte, elle présente l'inconvénient de ruisseler le long de la paroi et aucune pellicule lubrifiante ne perdure sur cette dernière. Dans le cas d'un contenant dans lequel il est préservé en permanence un certain niveau de pâte, l'eau sur les parois du contenant, sous le niveau minimum de pâte, est très vite absorbée, laissant ces parois sans lubrification.

Par ailleurs, même si l'eau est un lubrifiant économique, l'addition trop massive d'eau pour garantir cette lubrification entraîne un autre inconvénient, à savoir le mélange de l'eau avec l'huile mécanique des dispositifs de traitement, diminuant le graissage des machines, rendant plus difficile leur fonctionnement et plus coûteux leur entretien.

L'invention a pour but de pallier les inconvénients de l'état de la technique en proposant une paroi offrant une pellicule d'eau adhérente capable d'assurer l'écoulement de pâte de boulangerie.

Pour ce faire, la présente invention a pour objet une trémie destinée à recevoir de la pâte de boulangerie, viennoiserie, pâtisserie ou analogue, les parois de ladite trémie étant composées d'une surface le long de laquelle est prévu l'écoulement de ladite pâte, caractérisée par le fait que chaque paroi est recouverte d'au moins un film textile composé de fibres ou fils hydrophobes de lubrification, pour l'écoulement de ladite pâte, par rétention d'eau créant le long de ladite surface une pellicule d'eau au travers de moyens d'apport d'eau par injection de cette dernière entre laite surface et ledit film textile.

Selon d'autres caractéristiques de l'invention, ledit film textile se présente sous la forme d'une toile tissée.

Avantageusement, ledit film textile comporte un maillage dont la taille des mailles assure une rétention d'eau par tension de surface entre lesdites fibres ou fils.

Préférentiellement, ledit film textile est constitué d'une matière imputrescible, notamment du nylon.

De plus, cette surface comprend des moyens d'apport d'eau par capillarité entre ladite surface et ledit film textile.

Selon un mode de réalisation, les films recouvrant chaque paroi sont indépendants et ajustés aux dimensions de chaque surface.

Selon un autre mode de réalisation, les films recouvrant chaque paroi forment une poche ajustée aux dimensions de ladite trémie.

D'autres caractéristiques et avantages de l'invention ressortiront de la description détaillée qui va suivre des modes de réalisation non limitatifs de l'invention, en référence aux figures annexées dans lesquelles :
- la figure 1 représente une trémie pourvue de paroi selon l'invention ;
- la figure 2 est un détail d'une telle trémie ; et
- la figure 3 est une vue agrandie d'une coupe d'une paroi selon l'invention.

La présente invention concerne l'écoulement de pâte 1 de boulangerie, viennoiserie, pâtisserie ou analogue.

Plus particulièrement, elle vise une surface 2 de paroi 3 le long de laquelle cette pâte 1 est prévue de s'écouler.

Une telle paroi 3 trouvera une application dans tout type de contenant pour pâte 1, plus particulièrement dans le cadre d'un contenant de type trémie 4. Ainsi, l'invention trouvera un intérêt tout particulier dans le cas des trémies 4 d'alimentation d'un dispositif de division et de pesage de cette pâte 1.

Une caractéristique essentielle de l'invention réside dans le recouvrement de la surface 2 de la paroi 3 d'un trémie 4 par un film textile 5. Ce dernier est constitué d'une matière assurant une rétention d'eau.

Pour ce faire, ledit film textile 5 est composé de fibres ou de fils 6. Préférentiellement, lesdites fibres ou fils 6 sont hydrophobes. Avantageusement, ledit film textile 5 peut être constitué d'une matière imputrescible, notamment du nylon.

Selon un mode préférentiel de réalisation, le film 5 se présente sous la forme d'une toile tissée. Le tissage ou maillage dudit film 5 est réalisé serré, d'une densité compatible avec sa caractéristique de rétention d'eau. Spécifiquement, la taille des mailles est déterminée pour assurer une rétention d'eau par tension de surface entre lesdites fibres ou fils 6. Cette taille des mailles peut encore être définie en tenant compte de la tension de surface correspondant à la surface 2 recouverte par le film textile 5.

En effet, soumis à un apport d'eau et sous l'effet de cette tension de surface, entre les fibres ou fils 6, des gouttelettes d'eau 7 sont emprisonnées au sein dudit film 5. Pour cette même raison, un film d'eau se forme sur la surface 2 contre laquelle vient alors se plaquer le film textile 5. Lui-même, au travers de la rétention d'eau qu'il assure par tension de surface, crée une pellicule d'eau de lubrification favorisant l'écoulement de ladite pâte 1.

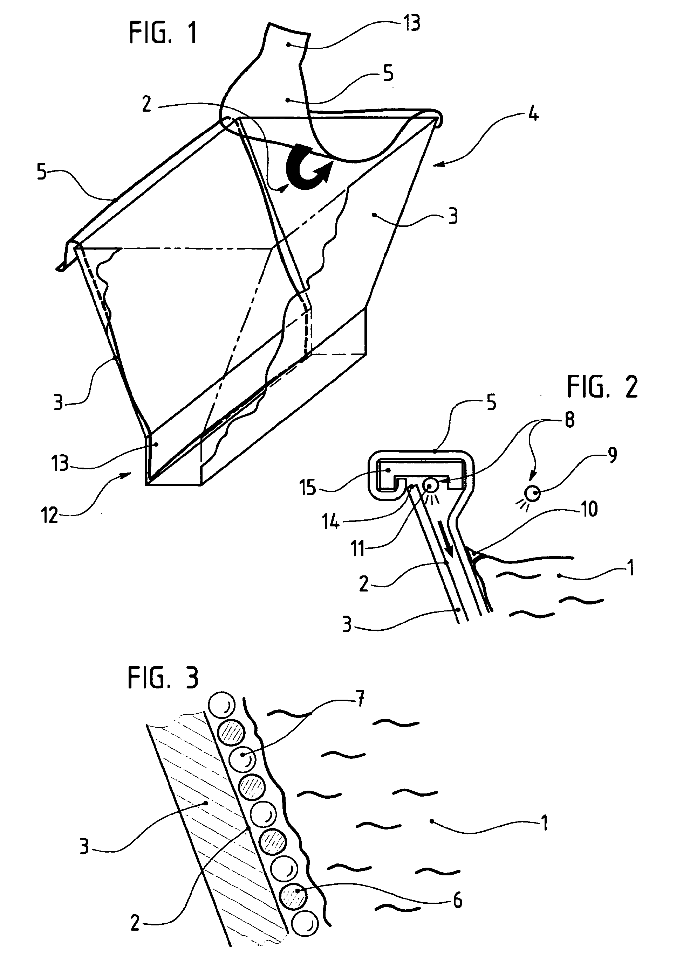

Au regard du grossissement de la figure 3, on remarque bien que les gouttelettes 7 d'eau se positionnent entre les fibres ou fils 6. Par conséquent, la pâte 1 glisse le long dudit film 5.

Toutefois, la pâte 1 n'étant pas hydrophobe, elle absorbe une partie de cette eau à son passage. C'est pourquoi il est nécessaire de réaliser un apport en eau au niveau du film textile 5, de manière à maintenir de l'eau emprisonnée dans les mailles ou entre les fibres 6 pour garantir une bonne lubrification.

Par conséquent, la présente invention comprend des moyens 8 d'apport en eau. Ils peuvent emprunter la forme de moyens de pulvérisation 9. Ceux-ci sont disposés au dessus du niveau de pâte 1 sur la surface 2. Dans le cas plus particulier d'une trémie 4, ils sont situé en partie supérieure de cette dernière, comme visible sur la figure 2, afin d'humidifier le film 5 par le dessus.

Toutefois, il est très difficile de maitriser l'apport d'eau de cette façon, en particulier de manière à assurer l'alimentation en eau de la partie du film 5 restant en permanence recouverte de pâte par ajout constant de cette dernière dans la trémie 4. Selon l'invention, il a été imaginé de fournir un apport d'eau par injection de cette dernière entre ladite surface 2 et ledit film textile 5.

C'est pourquoi les moyens d'apport en eau 8 comprennent un moyen d'injection d'eau 11 entre ladite surface 2 et le film textile 5, situé au-dessus du niveau de pâte 1 sur cette surface 2. Dans le cas d'une trémie 4 comme représentée dans la figure 2, ce moyen d'injection d'eau 11 s'étend intérieurement en bordure supérieure de ladite trémie 4.

Ainsi positionnée, l'apport en eau s'effectue, de manière surprenante, par capillarité le long de la surface 2 de la paroi 3. Ce déplacement de l'eau par capillarité est modélisé sur la figure 2 par une flèche entre la surface 2 de la paroi 3 et le film 5. Un apport en eau suffisant sera constaté par la formation d'un bourrelet d'eau 10 à la surface et en périphérie de la pâte 1, le long du film 5.

Le moyen d'injection d'eau 11 peut se présenter sous la forme d'un pulvérisateur, mais comprend préférentiellement un goutte-à-goutte est réparti sur tout le pourtour de la trémie 4 afin de fournir simultanément un apport en eau sur toute la périphérie, humidifiant chaque paroi 3 équipée du film 5.

A ce titre, la présente invention concerne toute paroi pourvue d'un tel film textile 5, tel que précédemment décrit. Dans le cadre particulier des contenants pour pâte 1, la présente invention a aussi pour objet une trémie 4 dont les parois 3 sont composées d'une surface 2 selon l'invention.

Selon le mode de réalisation préférentiel de l'invention, les films 5 de chaque paroi 3 sont indépendants. Ils sont donc ajustés aux dimensions de chaque surface 3. Plus spécifiquement, les films 5 sont conformés de manière à recouvrir parfaitement chaque paroi 3 de la trémie 4, notamment au niveau du goulot d'écoulement de la pâte prolongeant habituellement cette trémie 4 dans sa partie basse 12. Ainsi, un rabat 13 prolonge avantageusement le film 5 à son extrémité inférieure de manière à s'étendre dans ce goulot d'écoulement.

En partie haute de la trémie 4, un cadre 15 supporte chaque film 5. Ce cadre se positionne sur tout le pourtour du chant supérieur 14 de la trémie 4. Dans le cadre du mode de réalisation visible sur les figures, ce cadre 15 présente donc une forme rectangulaire. Il vient alors chapeauter le dessus de la trémie 4, chaque pan du film 5 venant s'y ajuster au travers de moyens de fixation adéquat (non représentés).

Selon un autre mode de réalisation, les films 5 de chaque paroi 3 forment une poche ajustée aux dimensions internes de ladite trémie 4. En d'autres termes, les pans du film textile 5 sont solidarisés ensemble, notamment au travers d'au moins une couture ou tout autre moyen permettant le maintien solidarisé entre eux des bords juxtaposés de deux films 5 situés l'un à côté de l'autre.

Quoi qu'il en soit, lors de sa mise en place, le film textile 5 est préférentiellement plaqué contre les parois 3 par humidification au travers d'une intervention manuelle ou automatique, afin qu'aucune pliure n'entrave l'apport en eau par capillarité, donc la lubrification du film 5 et l'écoulement de la pâte 1.

Une surface 2 d'une paroi 3 équipée d'un tel film textile 5 offre un écoulement amélioré de la pâte 1, sans avoir recours à un lubrifiant coûteux ou polluant pour ladite pâte 1. De plus, l'invention prévoit un apport constant d'eau afin de maintenir cette lubrification optimale.

On notera que la surface 2 de la paroi 3 peut recevoir préalablement un traitement particulier afin d'améliorer le contact du film textile 5 et/ou de faciliter le passage par capillarité et/ou dont la tension de surface répond aux exigences en matière de rétention d'eau.

## Revendications

1. Trémie (4) destinée à recevoir de la pâte (1) de boulangerie, viennoiserie, pâtisserie ou analogue, les parois (3) de ladite trémie (4) étant composées d'une surface (2) le long de laquelle est prévu l'écoulement de ladite pâte (1), **caractérisée par le fait que** chaque paroi (3) est recouverte d'au moins un film textile (5) composé de fibres ou fils (6) hydrophobes de lubrification, pour l'écoulement de ladite pâte (1), par rétention d'eau créant le long de ladite surface (2) une pellicule d'eau au travers de moyens (8) d'apport d'eau par injection de cette dernière entre ladite surface (2) et ledit film textile (5).

2. Trémie (4) selon la revendication 1, **caractérisée par le fait que** ledit film textile (5) se présente sous la forme d'une toile tissée.

3. Trémie (4) selon la revendication 2, **caractérisée par le fait que** ledit film textile (5) comporte un maillage dont la taille des mailles assure une rétention d'eau par tension de surface entre lesdites fibres ou fils (6).

4. Trémie (4) selon l'une quelconque des revendications précédentes, **caractérisée par le fait que** ledit film textile (5) est constitué d'une matière imputrescible, notamment du nylon.

5. Trémie (4) selon l'une quelconque des revendications 1 à 4, **caractérisée par le fait que** les films (5) recouvrant chaque paroi (3) sont indépendants et ajustés aux dimensions de chaque surface (2).

6. Trémie (4) selon l'une quelconque des revendications 1 à 4, **caractérisée par le fait que** les films (5) recouvrant chaque paroi (3) forment une poche ajustée aux dimensions de ladite trémie (4).

## Claims

1. Hopper (4) for receiving dough (1) for bread, patisserie, pastries or the like, the walls (3) of said hopper (4) being formed of a surface (2) along which the flow of said dough (1) is foreseen, wherein each wall (3) is covered with at least one textile film (5) formed of hydrophobic lubrication fibres or threads (6), for the flow of said dough (1) through retaining water creating along said surface (2) a water film through means (8) for supplying water by injecting the latter between said surface (2) and said textile film (5).

2. Hopper (4) according to claim 1, wherein said textile film (5) is in the form of a woven cloth.

3. Hopper (4) according to claim 2, wherein said textile film (5) includes a meshwork the mesh size of which ensures water retaining through stretching of the surface between said fibres or threads (6).

4. Hopper (4) according to any of the preceding claims, wherein said textile film (5) is formed of rot-proof material, namely nylon.

5. Hopper (4) according to any of claims 1 to 4, wherein the films (5) covering each wall (3) are independent and adjusted to the dimensions of each surface (2).

6. Hopper (4) according to any of claims 1 to 4, wherein the films (5) covering each wall (3) form a pocket adjusted to the dimensions of said hopper (4).

## Patentansprüche

1. Trichter (4) zum Aufnehmen von Teig (1) für Brot, Backwaren, Feingebäck oder ähnliches, wobei die Wände (3) des besagten Trichters (4) durch eine Oberfläche (2) gebildet sind, entlang der das Abfließen des besagten Teigs (1) vorgesehen ist, **dadurch gekennzeichnet, dass** jede Wand (3) mit wenigstens einem Textilfilm (5) überdeckt is, der aus hydrophoben Schmierfasern oder -drähten (6) besteht, für das Abfließen des besagten Teigs (1) über ein Zurückhalten von Wasser, das entlang der besagten Oberfläche (2) einen Wasserfilm bildet, über Mittel (8) für Wasserzufuhr durch Einspritzen des letzteren zwischen der besagten Oberfläche (2) und dem besagten Textilfilm (5).

2. Trichter (4) nach Anspruch 1, **dadurch gekennzeichnet, dass** der besagte Textilfilm (5) als ein gewebtes Tuch ausgestaltet ist.

3. Trichter (4) nach Anspruch 2, **dadurch gekennzeichnet, dass** der besagte Textilfilm (5) ein Maschenwerk umfaßt, dessen Maschengröße das Zurückhalten von Wasser durch Spannen der Oberfläche zwischen den besagten Fasern oder Drähten (6) sichert.

4. Trichter (4) nach irgendeinem der vorgehenden Ansprüche, **dadurch gekennzeichnet, dass** der besagte Textilfilm (5) aus nichtrottendem Material, nämlich Nylon, besteht.

5. Trichter (4) nach irgendeinem der Ansprüche 1 bis 4, **dadurch gekennzeichnet, dass** die Filme (5), die jede Wand (3) überdecken, unabhängig und den Abmessungen jeder Oberfläche (2) angepaßt sind.

6. Trichter (4) nach irgendeinem der Ansprüche 1 bis 4, **dadurch gekennzeichnet, dass** die Filme (5), die jede Wand (3) überdecken, eine den Abmessungen des besagten Trichters (4) angepaßte Tasche bilden.
